# EUROPEAN PATENT SPECIFICATION

(11) **EP 4 292 919 B1**
(45) Date of publication and mention of the grant of the patent: **04.11.2026**
(21) Application number: 22752490.7
(22) Date of filing: 11.01.2022
(51) Int. Cl.: B63B 49/00, B63B 79/10, B63B 79/20, B63B 79/40, B63H 25/04, G01C 21/22, G05B 11/36, G08G 3/00

(54) **SHIP HULL CONTROL APPARATUS AND SHIP HULL CONTROL METHOD**
SCHIFFSRUMPFSTEUERUNGSVORRICHTUNG UND SCHIFFSRUMPFSTEUERUNGSVERFAHREN
APPAREIL DE COMMANDE DE COQUE DE NAVIRE ET PROCÉDÉ DE COMMANDE DE COQUE DE NAVIRE

(30) Priority: 15.02.2021 JP 2021021452
(43) Date of publication of application: 20.12.2023
(73) Proprietor: Furuno Electric Co., Ltd., Nishinomiya-City, Hyogo 662-8580 (JP)
(72) Inventor: TAKAHASHI, Tomoyasu, Nishinomiya-City, Hyogo 662-8580 (JP); HASHIMOTO, Naoya, Nishinomiya-City, Hyogo 662-8580 (JP)
(74) Representative: Müller Hoffmann & Partner
(86) International application number: PCT/JP2022/000457
(87) International publication number: WO 2022/172657

(56) References cited:
- JP-B2- 5 528 251
- US-A- 4 074 648
- US-A- 4 692 868
- B&G: "B&G, H5000 Operation Manual", 12 December 2014 (2014-12-12), pages 1 - 124, XP093230909, Retrieved from the Internet <URL:https://softwaredownloads.navico.com/Lowrance/FTP/Lowrance_Software%20-%20Copy/BG_Documents/H5000_OM_EN_988-10630-003_w.pdf>
- TATSUYA, IESHIRO: "About the latest automatic steering system "BNAAC"", JOURNAL OF FISHING BOAT AND SYSTEM ENGINEERING ASSOCIATION OF JAPAN, vol. 11, no. 97, pages 46 - 59, XP009538987, ISSN: 1346-9800, Retrieved from the Internet <URL:https://jglobal.jst.go.jp/detail?JGLOBAL_ID=201102285548402276>
- OHTSU, KOHEI; HASEGAWA, KAZUHIKO: "Evaluation and prospects of Autopilot", PROCEEDINGS OF THE 3RD SYMPOSIUM ON SHIP MANOEUVRABILITY, THE SOCIETY OF NAVAL ARCHITECTS OF JAPAN, 1 January 1981 (1981-01-01), pages 243 - 278, XP009539022
- SAKUMA SHUN: "On the Numerical Method for Analyzing the Steering Quality Indices with the Drift Angle Considered", JOURNAL OF THE JAPAN SOCIETY OF NAVAL ARCHITECTS AND OCEAN ENGINEERS, no. 25, 1 June 2017 (2017-06-01), pages 1 - 7, XP055958615, ISSN: 1880-3717
- HANE FUYUKI: "A Comprehensive Identification Method for Vessel Motion Parameters", 1 December 2014 (2014-12-01), XP055958611, ISSN: 1881-1760, DOI: 10.2534/jjasnaoe.20.27

## Description

The present disclosure relates to the technology of a ship's autopilot (automatic navigation control). The document by B&G: "B&G, H5000 Operation Manual", dated 12 December 2014, pages 1-124, XP093230909, as retrievable from the Internet under URL:https://softwaredownloads.navico.com/Lowrance/FTP/Lowrance_Software%20-%20Copy/BG_Documents/H5000_OM_EN_988-10630-003_w.pdf, is an operation manual for an instrument and autopilot system developed for blue water cruisers and racing yachts. US 4 074 648 relates to an adaptive autopilot for marine vessels. The publication by Tatsuya, Ieshiro having the title "About the latest automatic steering system 'BNAAC'", Journal of Fishing Boat and System Engineering Association of Japan, vol. 11, no. 97, pages 46-59, XP009538987, teaches a hull control device comprising: a hull characteristic parameter setting unit that has a maneuverability index calculation unit that calculates a maneuverability index, and sets a hull characteristics dynamic parameter of a combined system of primary delay and dead time in which the behavior of the rudder and the behavior of the hull are integrated; a control parameter calculation unit that calculates, as a control parameter, the optimal gain of feedback control of the rudder angle; a turn rate setting calculation unit of a command rudder angle; and an autopilot execution unit that performs feedback control using the control parameter and the turn rate setting.

Patent Document 1 describes an autopilot device for ships. The autopilot device in Patent Document 1 uses feedback control (PID control) to control the rudder angle.

Patent literature 1: Japanese Patent Laid-Open Publication No. 55 -164594.

However, if the feedback control is not set properly, the desired control of the autopilot cannot be realized.

Therefore, the purpose of the present disclosure is to provide a technique for properly setting the feedback control according to the body of ship. The above objects are solved by the subject-matter of the independent claims.

The ship control device includes a ship characteristic parameter setting unit, a control parameter calculation unit, and an autopilot execution unit. The ship characteristic parameter setting unit sets the ship characteristic parameters of the combined system of first order lag and dead time that integrates the behavior of the rudder and the behavior of the ship. The control parameter calculation unit calculates the control parameters of feedback control to the rudder angle of the rudder using the ship characteristic parameters. The autopilot execution unit performs feedback control using the control parameters.

According to the invention, there is provided a ship control device comprising a ship characteristic parameter setting unit, a control parameter calculation unit, and an autopilot execution unit. The ship characteristic parameter setting unit is configured to set ship characteristic parameters of a combined system of first-order lag and dead time, which integrates a behavior of a rudder and a behavior of a ship. The control parameter calculation unit is configured to calculate control parameters for feedback control with respect to a rudder angle of the rudder using the ship characteristic parameters. The autopilot execution unit is configured to perform the feedback control using the control parameters.

Additionally the ship control device further comprises a desired turnrate calculation unit configured to calculate a desired turnrate of a command rudder angle with respect to the rudder angle using the ship characteristic parameters. The autopilot execution unit is further configured to perform the feedback control using the desired turnrate.

Additionally, or optionally, the desired turnrate calculation unit is further configured to calculate the desired turnrate using the ship characteristic parameters and a target heading.

Additionally, or optionally, the control parameter calculation unit is further configured to calculate the control parameters using an evaluation function including the rudder angle, a turnrate, and a heading as evaluation criteria.

Additionally, or optionally, the control parameter calculation unit is further configured to calculate the control parameters by including a squared error between an amount of overshoot of the heading with respect to the target heading and the target heading in the evaluation criteria.

Additionally, or optionally, the control parameter calculation unit is further configured to calculate the control parameters by including a squared error between the desired turnrate and the turnrate in the evaluation criteria.

Additionally, or optionally, the control parameter calculation unit is further configured to calculate the control parameters by including a squared value of the rudder angle in the evaluation criteria.

Additionally, or optionally, the ship characteristic parameter setting unit comprises a steering quality indices calculation unit, a rudder rate calculation unit, and a characteristic parameter estimation unit. The steering quality indices calculation unit is configured to calculate steering quality indices using a heading, a turnrate and the rudder angle. The rudder rate calculation unit is configured to calculate a rudder rate using the rudder angle. The characteristic parameter estimation unit is configured to calculate the ship characteristic parameters using the steering quality indices and the rudder rate.

Additionally, or optionally, the characteristic parameter estimation unit is further configured to calculate the ship characteristic parameters using a time-varying characteristic of the turnrate calculated from the rudder rate and the steering quality indices.

Additionally, or optionally, the characteristic parameter estimation unit is further configured to calculate the ship characteristic parameters using two timings having different predetermined values for the turnrate in the time-varying characteristic.

Additionally, or optionally, the characteristic parameter estimation unit is further configured to calculate dead time or a time constant of steering in the ship characteristic parameters using the time-varying characteristic.

Additionally, or optionally, the ship characteristic parameter setting unit comprises a steering quality indices calculation unit, a rudder rate calculation unit, and a characteristic parameter estimation unit. The steering quality indices calculation unit is configured to calculate steering quality indices using a length of ship between perpendiculars relative to the ship, a ship breadth of the ship, and a ship speed of the ship. The rudder rate calculation unit is configured to calculate a rudder rate using the rudder angle. The characteristic parameter estimation unit is configured to calculate the ship characteristic parameters using the steering quality indices and the rudder rate.

Additionally, or optionally, the steering quality indices calculation unit comprises a turning ability index calculation unit and a time constant of steering quality calculation unit. The turning ability index calculation unit is configured to calculate a turning ability index in the steering quality indices using the length of ship between perpendiculars and the ship breadth. The time constant of steering quality calculation unit is configured to calculate a time constant of steering quality in the steering quality indices using the turning ability index, the length of ship between perpendiculars, and the ship speed.

Additionally, or optionally, the steering quality indices calculation unit further comprises a non-dimensionalizing unit configured to non-dimensionalize the turning ability index. The time constant of steering quality calculation unit further comprises a non-dimensionalizing time constant of steering quality calculation unit configured to calculate a non-dimensionalizing time constant of steering quality from the non-dimensionalized turning ability index and a dimensionalising unit configured to dimensionalize the non-dimensionalizing time constant of steering quality.

In another embodiment of the present disclosure, there is provided a ship control method. The ship control method includes setting ship characteristic parameters of a combined system of first-order lag and dead time, which integrates a behavior of a rudder and a behavior of a ship, calculating control parameters for feedback control with respect to a rudder angle of the rudder using the ship characteristic parameters, and performing the feedback control using the control parameters.

In this configuration, ship characteristic parameters are set according to the ship, and the corresponding control parameters are calculated.

According to the disclosure, the setting of feedback control can be properly performed according to the ship.

The illustrated embodiments of the subject matter will be best understood by reference to the drawings, wherein like parts are designated by like numerals throughout. The following description is intended only by way of example, and simply illustrates certain selected embodiments of devices, systems, and processes that are consistent with the subject matter as claimed herein:
**Fig. 1**: Figure 1 is a functional block diagram showing a configuration of an autopilot processor unit of a ship control device according to an embodiment of the present disclosure;
**Fig. 2:** Figure 2 is a functional block diagram showing a configuration of a ship control system including the ship control device of **Fig. 1** according to an embodiment of the present disclosure;
**Fig. 3:** Figure 3 (A) is a diagram showing target and bow directions, and Figure 3 (B) is a diagram showing a rudder angle;
**Fig. 4:** Figure 4 is a flow chart showing a schematic processing from autotuning to autopilot control;
**Fig. 5:** Figure 5 is a functional block diagram showing a configuration of a first mode of a ship characteristic parameter setting unit;
**Fig. 6:** Figure 6 is a system configuration diagram of the first mode of the ship characteristic parameter setting unit;
**Fig. 7:** Figure 7 is a functional block diagram showing the configuration of the characteristic parameter estimation unit;
**Fig. 8:** Figure 8 is a waveform diagram showing an example of a response waveform of a turnrate for setting the ship characteristic parameters;
**Fig. 9:** Figure 9 (A) is a flow chart showing the schematic processing of the first calculation mode of the steering quality indices, and Figure 9 (B) is a flow chart showing the schematic processing of the calculation of the ship characteristic parameters;
**Fig. 10:** Figure 10 is a functional block diagram showing a configuration of a second mode of the ship characteristic parameter setting unit;
**Fig. 11:** Figure 11 is a system configuration diagram of the second mode of the ship characteristic parameter setting unit;
**Fig. 12:** Figure 12 is a flow chart showing the schematic processing of the second mode of calculation of the steering quality indices unit;
**Fig. 13:** Figure 13 is a graph showing an example of the time variation of the heading;
**Fig. 14:** Figure 14 (A) is a graph showing the time variation of the heading θ_{H} and the target heading θₛₑₜ, Figure 14 (B) is a graph showing the time variation of the desired turnrate rₛₑₜ and the turnrate rt, and Figure 14 (C) is a graph showing the time variation of the rudder angle ra; and
**Fig. 15:** Figure 15 is a flow chart showing the schematic processing of the calculation of the control parameters.

Example apparatus are described herein. In the following detailed description, reference is made to the accompanying drawings, which form a part thereof.

The example embodiments described herein are not meant to be limiting. It will be readily understood that the aspects of the present disclosure, as generally described herein, and illustrated in the drawings, can be arranged, substituted, combined, separated, and designed in a wide variety of different configurations, all of which are explicitly contemplated herein.

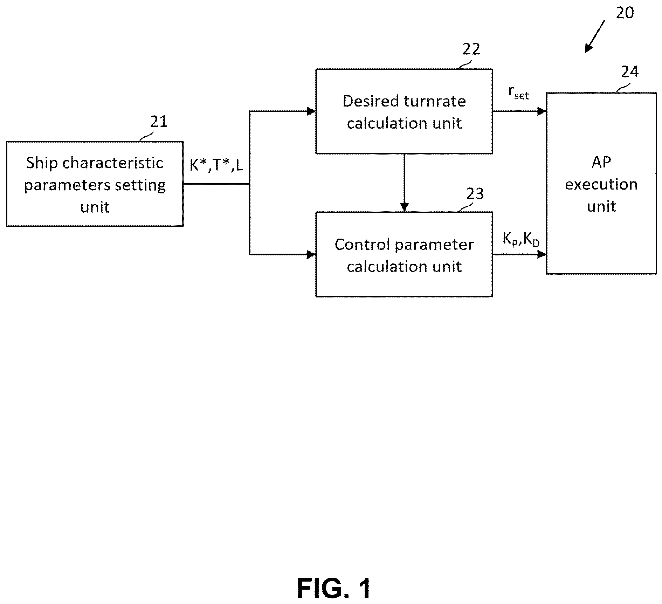

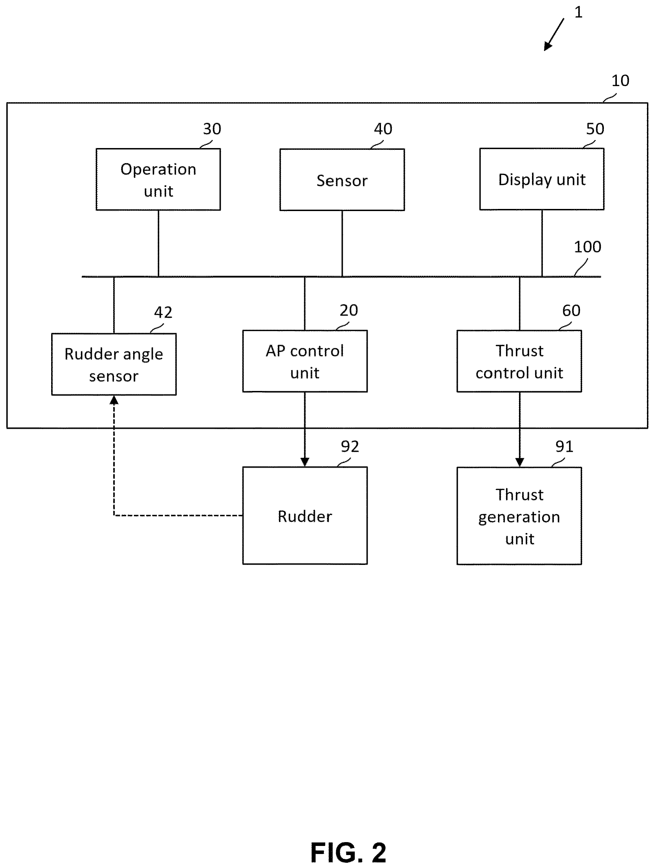

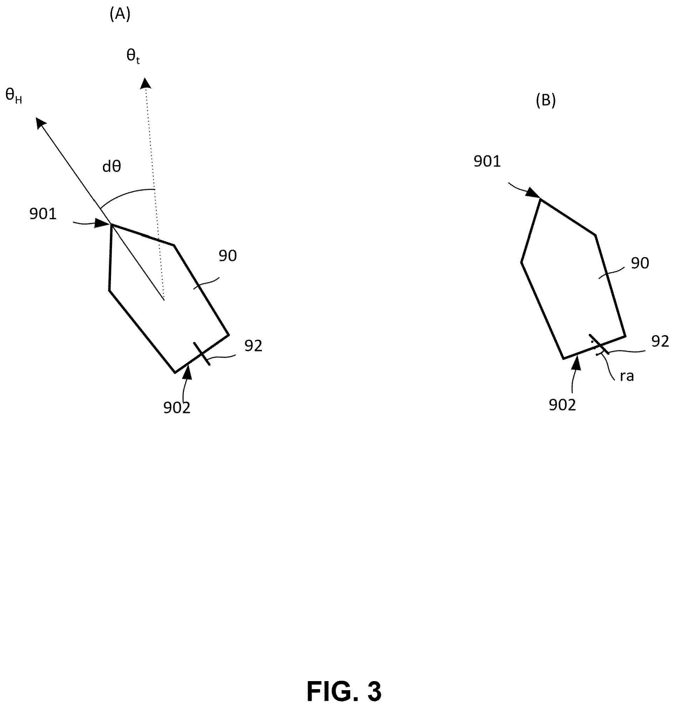

A ship control device and a ship control method according to an embodiment of the disclosure will be described with reference to the figures. **Fig. 1** is a functional block diagram showing a configuration of an autopilot processor unit of a ship control device according to the embodiment of the present disclosure. **Fig. 2** is a functional block diagram showing a configuration of a ship control system including the ship control device according to the embodiment of the present disclosure. **Fig. 3 (A)** is a diagram showing the target and bow directions, and **Fig. 3 (B)** is a diagram showing the rudder angle.

(Structure of ship control system) As shown in **Fig. 2****,** a ship control system **1** includes a ship control device **10,** a thrust generation unit **91,** and a rudder **92.** The ship control system **1** is provided on a ship **90** (see **Fig. 3****)** for automatic navigation control (autopilot control). The thrust generation unit **91** is composed of an engine or motor and propellers or the like driven by the engine or motor. A rudder **92** is provided near a stern **902** (see **Fig. 3****)** of the ship **90.**

The ship control device **10** includes an autopilot processor unit **20** (In **Fig. 2****,** it is referred to as an AP control unit **20.),** an operation unit **30,** a sensor **40,** a rudder angle sensor **42,** a display unit **50,** and a thrust control unit **60.** The autopilot processor unit **20,** the operation unit **30,** the sensor **40,** the rudder angle sensor **42,** the display unit **50,** and the thrust control unit **60** are connected by a data communication network **100** installed in the ship **90.**

The operation unit **30** is realized by, for example, a touch panel, physical buttons or switches. The operation unit **30** accepts various operations including the setting of autopilot control. The operation unit **30** outputs the operation contents to the autopilot processor unit **20.**

The sensor **40** measures a ship speed v of the ship (ship) equipped with the ship control device **10** and information about the movement, altitude, and position of the ship such as the heading θ_{H}. For example, the sensor **40** is realized by a positioning sensor using the positioning signal of GNSS (For example, GPS), an inertial sensor (acceleration sensor, angular velocity sensor, etc.), a magnetic sensor, etc.

The rudder angle sensor **42** measures a rudder angle ra (see **Fig. 3 (B))** of the rudder **92.** The rudder angle sensor **42** outputs the measured rudder angle ra to the autopilot processor unit **20.** The rudder angle sensor **42** is realized by, for example, a sensor for mechanically measuring the rudder angle, a sensor for electrically and optically measuring the rudder angle, etc.

The display unit **50** is realized by, for example, a liquid crystal panel, etc. The display unit **50** displays information, etc., related to the autopilot control input from the autopilot processor unit **20.** Although the display unit **50** can be omitted, it is preferable to have one, and by having the display unit **50,** the user can easily grasp the autopilot control status, etc.

The thrust control unit **60** is connected to the thrust generation unit 91. The thrust generation unit **91** generates thrust with an output corresponding to a thrust control signal from the thrust control unit **60.**

(Outline configuration and outline processing of autopilot processor unit **20)** The autopilot processor unit **20** is composed of, for example, an arithmetic processing unit such as a CPU and a storage unit. The storage unit stores a program to be executed by the autopilot processor unit **20.** In addition, the storage unit is utilized when computing the CPU.

The autopilot processor unit **20** executes autopilot control. The autopilot processor unit **20** also calculates control parameters for autopilot control (Proportional factor for P control K_{P}, Proportional factor for D control K_{D}) and a desired turnrate rₛₑₜ. At this time, the autopilot processor unit **20** sets these control parameters (Proportional factor for P control K_{P}, Proportional factor for D control K_{D}) and a ship characteristic parameter (Turning ability index K*, time constant of steering quality T *, and dead time L) to calculate the desired turnrate rₛₑₜ. Details of setting the ship characteristic parameters (Turning ability index K*, time constant of steering quality T*, and dead time L), calculation of the control parameters (Proportional factor for P control K_{P}, Proportional factor for D control K_{D}) and setting the desired turnrate rₛₑₜ will be described later.

The autopilot processor unit **20** is connected to the rudder **92.** The autopilot processor unit **20** sets the command rudder angle ri by the autopilot control and outputs it to the rudder **92.** The rudder **92** changes the rudder angle ra according to the command rudder angle ri.

As shown in **Fig. 3 (A)****,** the heading θ_{H} is the heading to which a bow **901** of the ship 90 points. The target heading θₛₑₜ is the heading to which the bow **901** is to be turned by autopilot control.

The autopilot processor unit **20** sequentially sets the command rudder angle ri as autopilot control so that the bow heading θ_{H} approaches the target heading θₛₑₜ, in other words, so that a declination angle dθ, which is the difference between the target heading θₛₑₜ and the bow heading θ_{H}, approaches 0. At this time, the rudder angle ra measured by the rudder angle sensor **42** is fed back to the autopilot processor unit **20.** Based on this rudder angle ra, the autopilot processor unit **20** performs feedback control (For example, PID control) using the above control parameters, sets the command rudder angle ri according to the desired turnrate rₛₑₜ, and outputs it to the rudder **92.** In the autopilot processor unit **20,** the proportionality factor K_{P} for P control and the proportionality factor K_{D} for D control are specifically set as control parameters by a method to be described later, and the proportionality factor K₁ for I control is also set appropriately.

At this time, the autopilot processor unit **20** sets control parameters (Proportional factor for P control K_{P}, Proportional factor for D control K_{D}), desired turnrate rₛₑₜ, and ship characteristic parameters (Turning ability index K*, time constant of steering quality T *, and dead time L) as described later. That is, the autopilot processor unit **20** sets the ship characteristic parameters of the combined system of first order lag and dead time, and from these ship characteristic parameters, calculates and sets the control parameters and desired turnrate.

With this, the autopilot processor unit **20** may perform appropriate feedback control according to the shape and size of the ship **90** and the rudder **92,** that is, according to the behavior of the ship **90** and the behavior of the rudder **92.** Therefore, the ship control device **10** may perform appropriate autopilot control according to the shape and size of the ship **90** and the rudder **92.** In particular, if the ship **90** is small and the operation of the rudder **92** is not negligibly fast with respect to the operation of the ship **90,** in other words, if the ship **90** is easy to operate in accordance with the operation of the rudder **92,** autopilot control using the settings described below may work more effectively.

Moreover, by setting the ship characteristic parameters of the combined system of the first order lag and the dead time, it is not necessary to set the parameters complicated to set the second order lag system, etc. Therefore, it is easy to set the ship characteristic parameters.

(More specific instructions on how to set them) As shown in **Fig. 1****,** the autopilot processor unit **20** includes a ship characteristic parameter setting unit **21,** a desired turnrate calculation unit **22,** a control parameter calculation unit **23,** and an autopilot execution unit **24** (In **Fig. 1****,** it is referred to as AP execution unit **24.).**

The ship characteristic parameter setting unit **21** sets the ship characteristic parameters estimated by the combined system of first order lag and dead time using any of a number of setting methods. That is, the ship characteristic parameter setting unit **21** sets the turning ability index K*, the time constant of steering quality T*, and the dead time L. The ship characteristic parameter setting unit **21** outputs the ship characteristic parameters to the desired turnrate calculation unit **22** and the control parameter calculation unit **23.**

The desired turnrate calculation unit **22** calculates a desired turnrate rₛₑₜ using a ship characteristic parameter (Turning ability index K*, time constant of steering quality T*, and dead time L) and a target heading θₛₑₜ. The desired turnrate calculation unit **22** outputs the desired turnrate rₛₑₜ to the control parameter calculation unit **23** and the autopilot execution unit **24.**

The control parameter calculation unit **23** calculates a control parameter (Proportional factor for P control K_{P}, Proportional factor for D control K_{D}) using a ship characteristic parameter (Turning ability index K*, time constant of steering quality T*, and dead time L) and the desired turnrate rₛₑₜ. The control parameter calculation unit **23** outputs a control parameter (Proportional factor for P control K_{P}, Proportional factor for D control K_{D}) to an autopilot execution unit **24.**

Using a control parameter (Proportional factor for P control K_{P}, Proportional factor for D control K_{D}) and the desired turnrate rₛₑₜ, the autopilot execution unit **24** performs feedback control and outputs a command rudder angle ri to the rudder **92.**

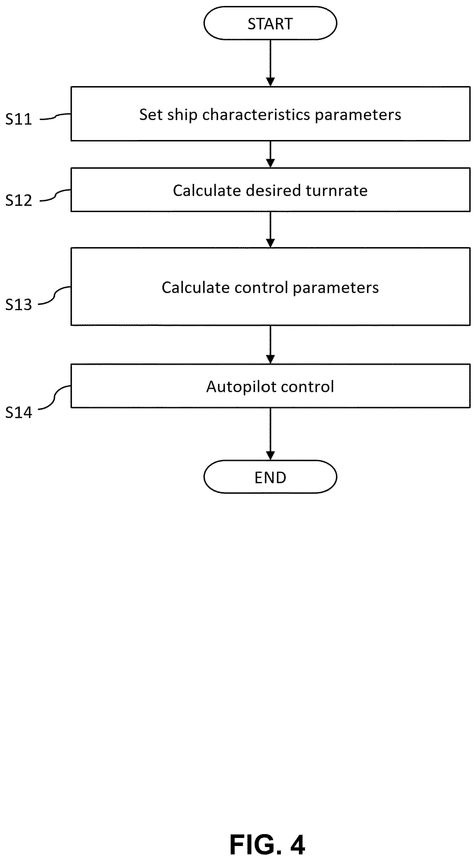

These processes may be realized by prestoring the program in a storage unit as a program or the like and then reading and executing the program by an arithmetic processing device such as a CPU. In this case, the arithmetic processing device may, for example, execute the processing of the flow chart shown in **Fig. 4. Fig. 4** is a flow chart showing the schematic process from auto-tuning to auto-pilot control.

When the operation input of auto-tuning is received from the operation unit **30,** for example, the arithmetic processing unit performs given processing and control to set ship characteristic parameters (Turning ability index K*, time constant of steering quality T*, and dead time L) **(S11).** Using the ship characteristic parameters, the arithmetic processing unit calculates a desired turnrate rₛₑₜ **(S12).**

Using the ship characteristic parameters and the desired turnrate rₛₑₜ, the arithmetic processing unit calculates a control parameter (Proportional factor for P control K_{P}, Proportional D factor for control K_{D}) **(S13).** Using the control parameters and the desired turnrate rₛₑₜ, the arithmetic processing unit performs autopilot control **(S14).**

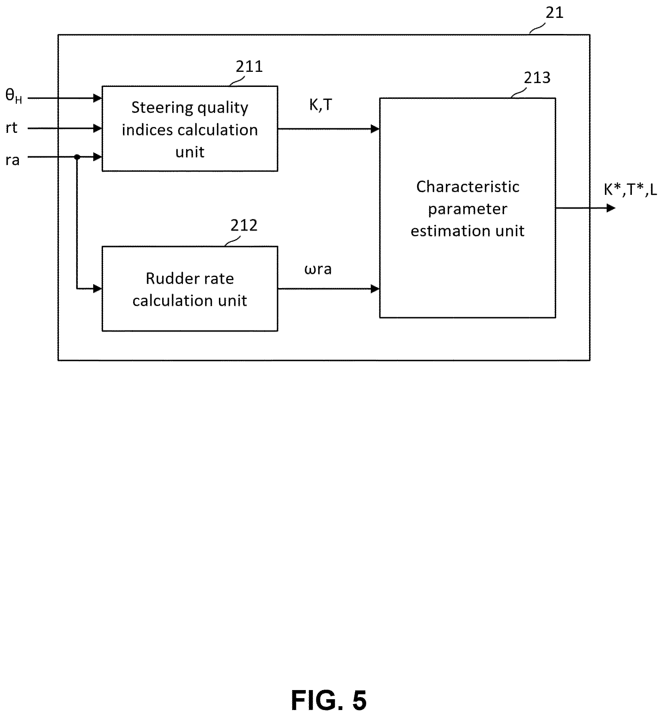

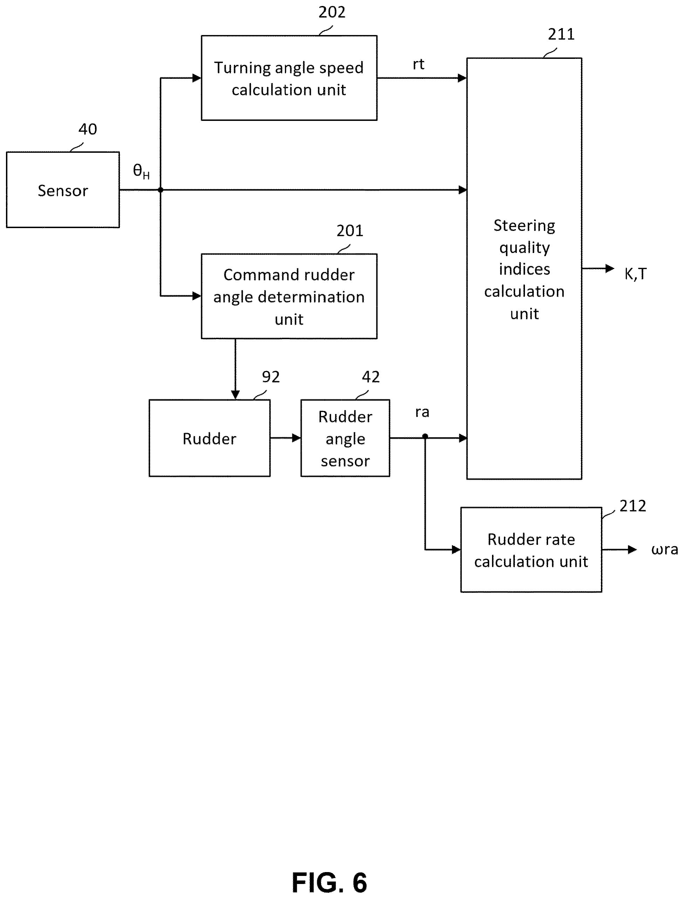

(First aspect of setting ship characteristic parameters) **Fig. 5** is a functional block diagram showing the configuration of the first aspect of the ship characteristic parameter setting unit **21.** **Fig. 6** is a system configuration diagram of the first mode of setting ship characteristic parameters.

As shown in **Fig. 5****,** the ship characteristic parameter setting unit **21** includes a steering quality indices calculation unit **211,** a rudder rate calculation unit **212,** and a characteristic parameter estimation unit **213.**

A heading θ_{H}, a turnrate rt, and a rudder angle ra are input to the steering quality indices calculation unit **211.** The heading θ_{H}, the turnrate rt, and the rudder angle ra are generated for the calculation of the steering quality indices and are obtained by, for example, a Z test (More specifically, the 5 degrees Z test).

As shown in **Fig. 6****,** the heading θ_{H} is input from the sensor **40** to the steering quality indices calculation unit **211.**

The turnrate rt is input from the turning angle speed calculation unit **202** to the steering quality indices calculation unit **211.** The turning angle speed calculation unit **202** calculates turnrate rt from the rate of time change of the heading θ_{H} measured by the sensor **40.** The turning angle speed calculation unit **202** is realized, for example, by an arithmetic processing unit constituting an autopilot processor unit **20** including the ship characteristic parameter setting unit **21.**

The rudder angle ra is input from a rudder angle sensor **42** to the steering quality indices calculation unit **211.** More specifically, the command rudder angle determination unit **201** switches the command rudder angle ri by the heading θ_{H} in the Z test. The command rudder angle determination unit **201** is realized by the autopilot processor unit **20.** The command rudder angle determination unit **201** outputs the command rudder angle ri to the rudder **92.** The rudder **92** controls the rudder angle according to the command rudder angle ri. The rudder angle sensor **42** measures the rudder angle (actual rudder angle) ra of the rudder **92** and outputs it to the steering quality indices calculation unit **211.** The rudder angle sensor **42** also outputs the rudder angle ra to the rudder rate calculation unit **212.**

The steering quality indices calculation unit **211** calculates the steering quality indices, i.e., the turning ability index (gain) K and the time constant of steering quality (time constant) T, using the heading θ_{H}, the pivoting speed rt and the rudder angle ra. For example, the steering quality indices calculation unit **211** calculates the steering quality indices (Turning ability index K and time constant of steering quality T) using the known Nomoto model.

The rudder rate calculation unit **212** calculates the rudder rate ω ra from the rate of time change of the rudder angle ra.

The characteristic parameter estimation unit **213** calculates the ship characteristic parameters (Turning ability index (gain) K*, time constant of steering quality (time constant) T*, and dead time L) using the steering quality indices (Turning ability index K and time constant of steering quality T) and the rudder rate ω ra. At this time, the characteristic parameter estimation unit **213** calculates the ship characteristic parameters using the response simulation of the turnrate to the step-like command rudder angle.

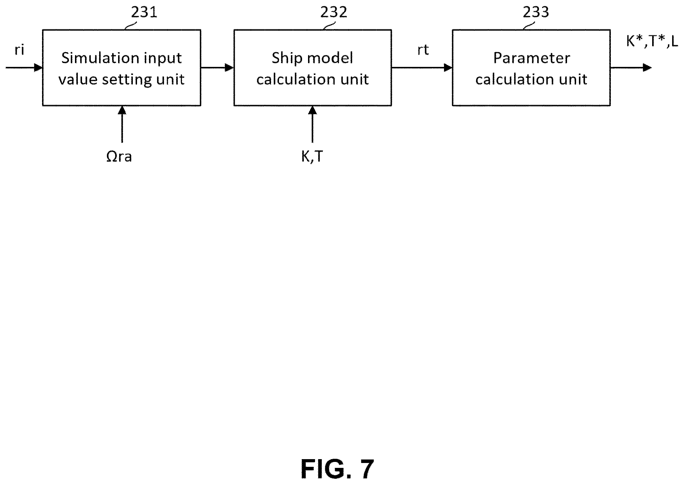

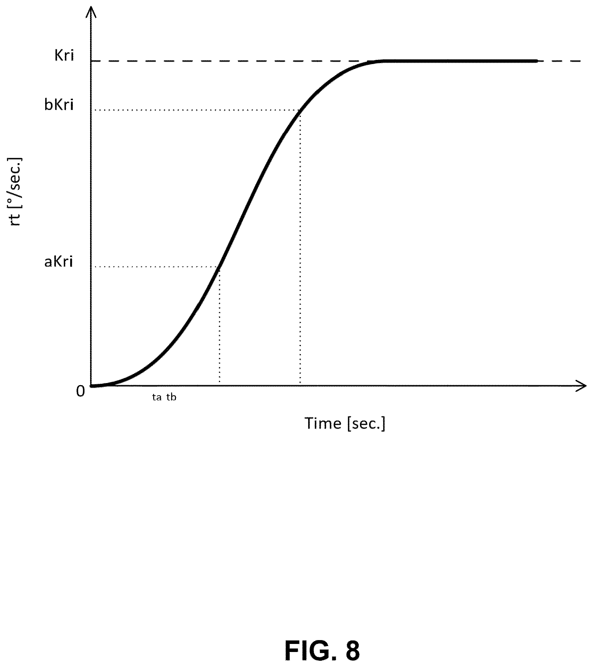

**Fig. 7** is a functional block diagram showing the configuration of the characteristic parameter estimation unit. **Fig.** 8 is a waveform diagram showing an example of the response waveform of the turnrate for setting ship characteristic parameters.

As shown in **Fig. 7****,** the characteristic parameter estimation unit **213** includes a simulation input value setting unit **231,** a ship model calculation unit **232,** and a parameter calculation unit **233.**

A rudder rate ω is input to the simulation input value setting unit **231.** A command rudder angle ri is also input to the simulation input value setting unit **231.** The simulation input value setting unit **231** sets the command rudder angle for simulation in steps so that the command rudder angle ri becomes the maximum value, and sets the simulation input value using a ramp function for the command rudder angle. At this time, the simulation input value setting unit **231** sets the slope of the ramp function according to the rudder rate ω ra. The simulation input value setting unit **231** outputs the simulation input value to the ship model calculation unit **232.**

The ship model calculation unit **232** applies the simulation input value and the steering quality indices (Turning ability index K and time constant of steering quality T) to the Nomoto model to simulate the turnrate rt. With this arithmetic operation, a simulation waveform of the time variation of the turnrate rt is obtained as shown in **Fig. 8****.** As shown in **Fig. 8****,** the turnrate rt becomes a nonlinear waveform that increases with time according to the slope of the ramp function (rudder rate ω ra) and the time constant of steering quality T, and plateaus at the value (Kri) of the command rudder angle ri multiplied by the turning ability index K. The ship model calculation unit **232** outputs the turnrate rt obtained in the simulation to the parameter calculation unit **233.**

The parameter calculation unit **233** calculates a ship characteristic parameter (Turning ability index (gain) K*, time constant of steering quality (time constant) T*, and dead time L) using the turning ability index K of the steering quality indices and the turnrate rt obtained in the simulation.

More specifically, the parameter calculation unit **233** calculates the turning ability index K* of the ship characteristic parameter using the turning ability index K of the steering quality indices. For example, the parameter calculation unit **233** sets the turning ability index K* of the ship characteristic parameter to the same value as the turning ability index K of the steering quality indices.

The parameter calculation unit **233** calculates the time constant of steering quality T* and dead time L of the ship characteristic parameters using the time when the turnrate in the simulation waveform of the turnrate rt is a predetermined value. More specifically, the parameter calculation unit **233** detects the time ta at the first value of the turnrate rt in the simulation waveform (the value of aKri in **Fig.** 8). The parameter calculation unit **233** detects the time tb at the second value of the turnrate rt in the simulation waveform (the value of bKri in **Fig. 8****).** Note that a and b are values greater than 0 and less than 1, and a is smaller than b (a < b). For example, the first value is set near the boundary where the rate of change of the slope of the waveform shifts from the interval where the rate of change of the slope of the waveform changes to the interval where the rate of change of the slope of the waveform remains constant. The second value is set near the boundary where the rate of change of the slope of the waveform shifts from the interval where the rate of change of the slope of the waveform remains constant to the interval where the rate of change of the slope of the waveform changes. The time ta and the time tb are changed by the step width of the command rudder angle.

The parameter calculation unit **233** calculates the time constant of steering quality T * of the ship characteristic parameters using the time ta and the time tb and the following equation.${T}^{∗} = {C}_{1} \left(tb-ta\right)$ C₁ is a given constant.

The parameter calculation unit **233** calculates the time ta, the time tb and the dead time L of the ship characteristic parameters using the following equation.$L = {C}_{21} ta - {C}_{22} tb$ C₂₁ and C₂₂ are given constants.

By performing such processing, the characteristic parameter estimation unit **213** can estimate and calculate the ship characteristic parameters according to the shape, size and performance of the ship **90** and the rudder **92.**

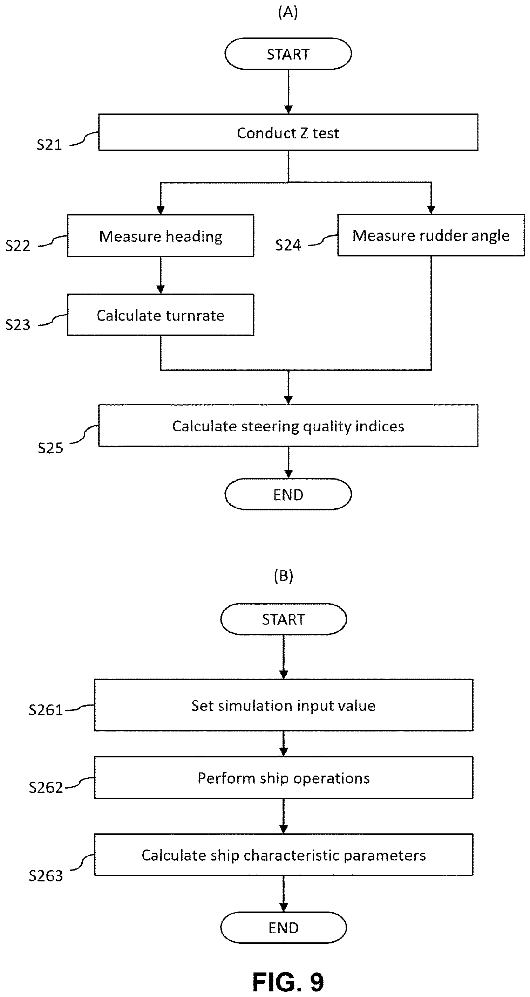

It should be noted that these processes may be realized by prestoring them in a storage unit as a program or the like and then reading and executing the program by an arithmetic processing unit such as a CPU. In this case, the arithmetic processing unit may, for example, execute the processing of the flow chart shown in **Fig. 9 (A)** and **Fig. 9 (B). Fig. 9 (A)** is a flow chart showing the schematic processing of the first calculation mode of the steering quality indices, and **Fig.** 9 **(B)** is a flow chart showing the schematic processing of the calculation of the ship characteristic parameters.

The arithmetic processing unit controls the execution of the Z test **(S21).** The arithmetic processing unit measures the heading θ_{H} **(S22)** and calculates the turnrate rt **(S23).** The arithmetic processing unit also measures the rudder angle ra **(S24).**

The arithmetic processing unit calculates the steering quality indices using the heading θ_{H}, the turnrate rt and the rudder angle ra **(S25).**

The arithmetic processing unit sets the simulation input value using the rudder rate ω ra and the command rudder angle ri **(S261).** The arithmetic processing unit performs the Ship operation using the simulation input value and the operability index **(S262).**

The arithmetic processing unit calculates the ship characteristic parameters from the response waveform of the turnrate, which is the simulation result **(S263).**

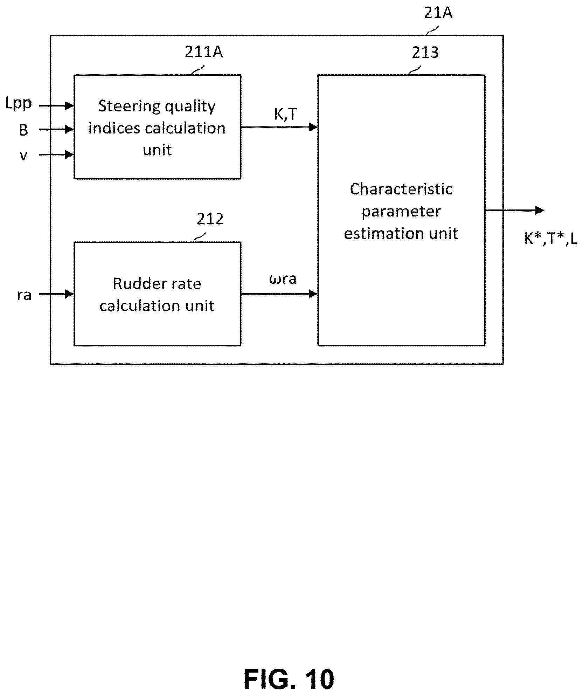

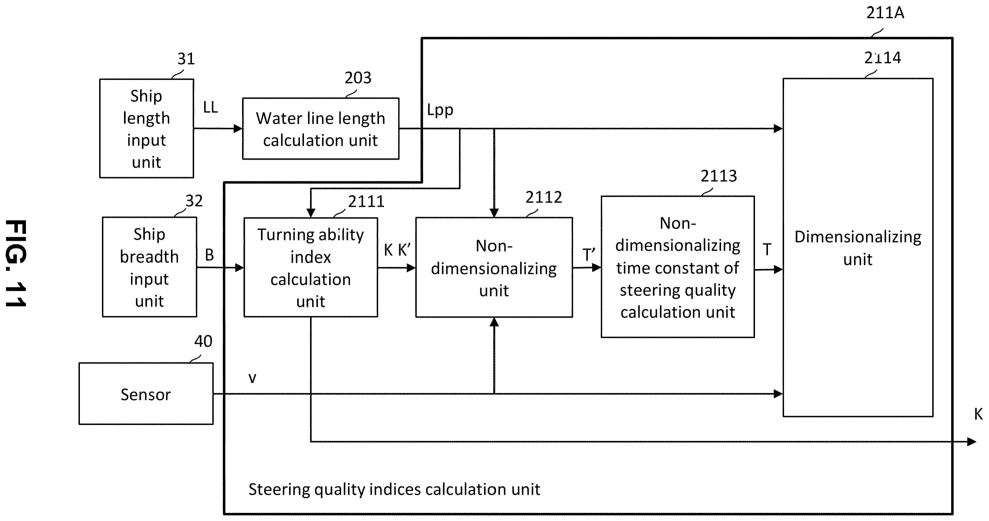

(Second aspect of setting the ship characteristic parameters) **Fig. 10** is a functional block diagram showing the configuration of the second aspect of the ship characteristic parameter setting unit. **Fig. 11** is a system configuration diagram of the second aspect of the ship characteristic parameter setting unit.

As shown in **Fig. 10****,** the ship characteristic parameter setting unit **21 A** includes a steering quality indices calculation unit **211 A,** the rudder rate calculation unit **212,** and the characteristic parameter estimation unit **213.** The configuration and basic processing of the rudder rate calculation unit **212** and the characteristic parameter estimation unit **213** are the same as the configuration and basic processing of the rudder rate calculation unit **212** and the characteristic parameter estimation unit **213** in the ship characteristic parameter setting unit **21** described above, and detailed descriptions are omitted.

A length of ship between perpendiculars Lpp, a ship width B and a ship speed v are input to the steering quality indices calculation unit **211 A.**

The length of ship between perpendiculars Lpp is calculated from a ship length LL. Specifically, for example, the length of ship between perpendiculars Lpp is calculated by the formula Lpp = k1L. Note that k1 is a predetermined constant smaller than 1.0 and can be set by the draft height of the ship **90.** The ship length LL is, for example, input by the user or the like at the operation unit **30** (corresponding to a ship length input unit **31** in **Fig. 11****).**

The ship width B is, for example, input by the user or the like at the operation unit **30** (corresponding to a ship width input unit **32** in **Fig. 11****).** The ship speed v is measured and input by, for example, the sensor **40.**

Using the length of ship between perpendiculars Lpp, the ship width B and the ship speed v, the steering quality indices calculation unit **211 A** calculates a steering quality indices, that is, a turning ability index (gain) K and a time constant of steering quality (time constant) T.

Specifically, as shown in **Fig. 11****,** the steering quality indices calculation unit **211 A** includes a turning ability index calculation unit **2111,** a non-dimensionalizing unit **2112,** a non-dimensionalizing time constant of steering quality calculation unit **2113,** and a dimensionalizing unit **2114.**

The length of ship between perpendiculars Lpp and the ship width B are input to the turning ability index calculation unit **2111.** The turning ability index calculation unit **2111** calculates the turning ability index K from the Length of ship between perpendiculars Lpp and ship width B using the following equation.$K = {f}_{1} \left(Lpp\right) / {f}_{2} \left(B\right) + {C}_{3}$ Note that f₁ (Lpp) is a constant determined by the length of ship between perpendiculars Lpp, f₂ (B) is a constant determined by the ship width B, and C₃ is a desired constant. This equation was statistically derived from the experimental results of several ships with similar shapes as the ship **90.**

The turning ability index K, the length of ship between perpendiculars Lpp, and the ship speed v are input to the non-dimensionalizing unit **2112.** The non-dimensionalizing unit **2112** dimensionalizes the turning ability index K using the length of ship between perpendiculars Lpp and the ship speed v. The dimensionless turning ability index K 'is calculated, for example, from the equation K' = (Lpp/v) K.

The dimensionless turning ability index K 'is input to the non-dimensionalizing time constant of steering quality calculation unit **2113.** The non-dimensionalizing time constant of steering quality calculation unit **2113** calculates the dimensionless time constant of steering quality T 'from the dimensionless turning ability index K' using the following formula:$T ′ = {k}_{2} K ′ - {C}_{4}$ Note that k₂ and C₄ are the desired constants. This equation was statistically derived from the experimental results of several vessels with the same shape as the ship **90.**

In the dimensionalizing unit **2114,** the dimensionless time constant of steering quality T ', the Length of ship between perpendiculars Lpp and the ship speed v are input. The dimensionalizing unit **2114** dimensionalizes the dimensionless time constant of steering quality T 'using the Length of ship between perpendiculars Lpp and the ship speed v. The dimensionalized time constant of steering quality T is calculated, for example, from the equation T = (Lpp/v) T'.

The steering quality indices calculation unit **211 A** outputs the turning ability index K output from the turning ability index calculation unit **2111** and the time constant of steering quality T output from the dimensionalizing unit **2114** to the characteristic parameter estimation unit **213.**

By using such a configuration and processing, the steering quality indices calculation unit **211 A** can calculate the steering quality indices according to the shape, size and performance of the ship **90** and the rudder **92,** and in turn, the characteristic parameter estimation unit **213** can estimate and calculate the ship characteristic parameters according to the shape, size and performance of the ship **90** and the rudder **92.**

It should be noted that the above equation for calculating the turning ability index K and the equation for calculating the dimensionless time constant of steering quality T 'are better when the coefficients for multiplying the Length of ship between perpendiculars Lpp, the ship width B and the dimensionless turning ability index K' are varied depending on the specifications of the vessel, for example, whether it is a drainage ship or a gliding ship.

Moreover, by adopting this configuration and treatment, the ship characteristic parameter setting unit **21 A** can set the ship characteristic parameters without performing the Z test.

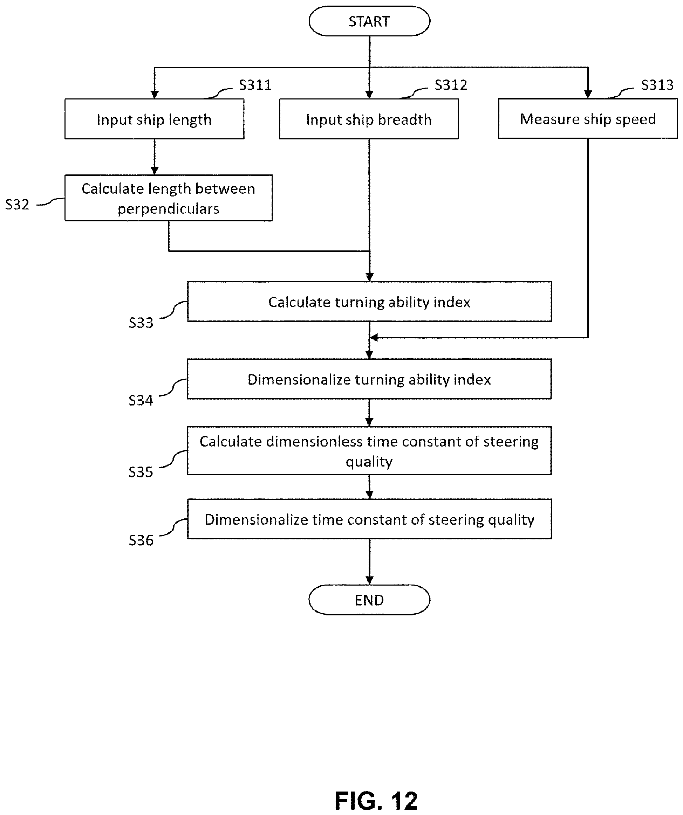

It should be noted that these treatments may be realized by prestoring the ship characteristic parameters in a storage unit as a program or the like and then reading and executing the program by an arithmetic processing device such as a CPU. In this case, the arithmetic processing device may, for example, execute the processing of the flow chart shown in **Fig. 12. Fig. 12** is a flow chart showing the schematic processing of the second mode of calculation of the steering quality indices.

The arithmetic processing unit accepts input of the ship length LL **(S311)** and calculates the Length of ship between perpendiculars Lpp **(S32).** The arithmetic processing unit also accepts input of the ship width B **(S312)** and measures the ship speed v **(S313).**

The arithmetic processing unit calculates a turning ability index K from the Length of ship between perpendiculars Lpp and the ship width B **(S33).** The arithmetic processing unit uses the Length of ship between perpendiculars Lpp and the ship speed v to dimensionalize the turning ability index K and calculate a dimensionless turning ability index K **'(S34).**

The arithmetic processing unit calculates a dimensionless time constant of steering quality T 'from the dimensionless turning ability index K' **(S35).** The arithmetic processing unit dimensionalizes the dimensionless time constant of steering quality T 'and calculates the time constant of steering quality T **(S36).**

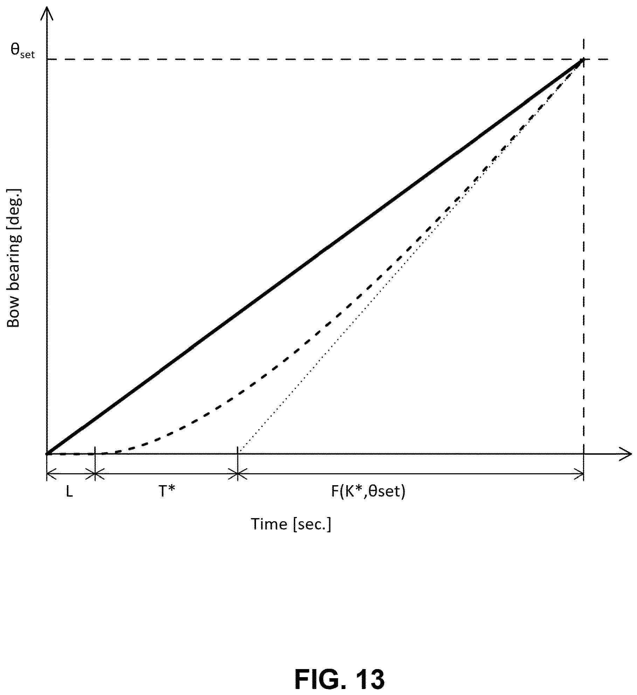

(Specific calculation method of desired turnrate rₛₑₜ) **Fig. 13** is a graph showing an example of the time change in heading. The dashed line in **Fig. 13** shows the time change in heading when a step function of the upper limit raₘₐₓ of the rudder angle ra is input. The solid line shows the straight line for calculating the desired turnrate rₛₑₜ. Also, θₛₑₜ is the target heading.

As shown in **Fig. 13****,** the heading does not change during the dead time L, gradually rises according to the time constant of steering quality (time constant) T * of the first order lag system, and changes at a rate of change according to the turning ability index K * of the first order lag system to reach the target heading θₛₑₜ.

Then, the desired turnrate calculation unit **22** uses this characteristic to calculate the desired turnrate rₛₑₜ. More specifically, the desired turnrate calculation unit **22** calculates the desired turnrate rₛₑₜ from the time difference between the control start time and the time to reach the target heading θₛₑₜ (determined from the ship characteristic parameters of the first order lag system) and the target heading θₛₑₜ using the following equation:${r}_{set} = {θ}_{set} / {f}_{3} \left(L, {T}^{∗}, {K}^{∗},{θ}_{set}\right)$ Note that f₃ (L, T *, K *, θₛₑₜ) is a constant that defines the time difference between the control start time and the arrival time of the heading to the target θₛₑₜ. That is, the desired turnrate calculation unit **22** sets the slope of the solid line shown in **Fig. 13** to the desired turnrate rₛₑₜ.

Thus, the desired turnrate calculation unit **22** can set the desired turnrate rₛₑₜ to an appropriate value according to the shape, size and performance of the ship **90.**

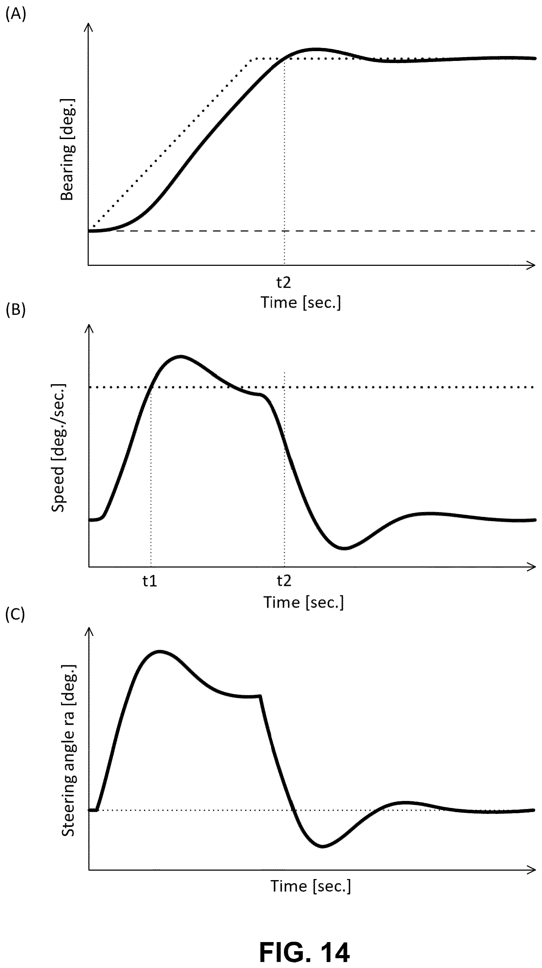

(Specific method of setting control parameters) **Fig. 14 (A)** is a graph showing the time change of heading θ_{H} and target heading θₛₑₜ, with the solid line indicating the heading and the dotted line indicating the target heading. **Fig. 14 (B)** is a graph showing the time change of the desired turnrate rₛₑₜ and the turnrate rt, with the solid line indicating the turnrate rt and the dotted line indicating the desired turnrate rₛₑₜ. **Fig. 14 (C)** is a graph showing the time change of the rudder angle ra.

The control parameter calculation unit **23** sets evaluation criteria for each of heading θ_{H}, turnrate rt, and rudder angle ra at the time of turning.

(Evaluation criteria for heading θ_{H} at the time of turning) The control parameter calculation unit **23** sets the evaluation criteria based on the squared error between the overshoot amount M for the target heading θₛₑₜ of the heading θ_{H} and the target value Mₛₑₜ. That is, the control parameter calculation unit **23** sets the evaluation criteria based on the difference between the maximum value during the period when the heading θ_{H} exceeds the target heading θₛₑₜ shown in **Fig. 14 (A)** and the target value for the maximum value.

For example, the target value Mₛₑₜ for the amount of overshoot can be set with the maximum amount of overshoot required to achieve the desired behavior of the ship **90.**

(Evaluation criteria for turnrate rt at the time of turning) The control parameter calculation unit **23** sets an evaluation standard based on the squared error between the turnrate rt and the desired turnrate rₛₑₜ. More specifically, the control parameter calculation unit **23** detects the time when the turnrate rt first reaches the desired turnrate rₛₑₜ as time t1 (see **Fig. 14 (B)****).** In addition, the control parameter calculation unit **23** detects the time when the heading θ_{H} first reaches the target azimuth θₛₑₜ as time t2 (see **Fig. 14 (A)****).**

The control parameter calculation unit **23** sets the evaluation standard based on the squared error between the turnrate rt and the desired turnrate rₛₑₜ during the time t1 to time t2. More specifically, the control parameter calculation unit **23** sets the statistical value of the squared error between the turnrate rt and the desired turnrate rₛₑₜ during the time t1 to time t2 as the evaluation standard. That is, the control parameter calculation unit **23** sets the evaluation standard based on the difference between the turnrate rt and the desired turnrate rₛₑₜ during the period between time t1 and time t2 shown in **Fig. 14 (B)****.**

(Evaluation standard for rudder angle ra at turning) The control parameter calculation unit **23** sets an evaluation standard based on the square value of the rudder angle ra. More specifically, the control parameter calculation unit **23** sets a statistical value of the square value of the rudder angle ra as an evaluation standard. That is, the control parameter calculation unit **23** is shown in **Fig. 14 (C)****.** Evaluation criteria are set based on the magnitude of the rudder angle ra with respect to the reference rudder angle (rudder angle ra = 0 degrees).

By setting such evaluation criteria, the control parameter calculation unit **23** can set appropriate evaluation criteria according to the shape, size and performance of the ship **90.**

The control parameter calculation unit **23** sets an evaluation function using each of the aforementioned evaluation criteria. Then, the control parameter calculation unit **23** calculates a control parameter (Proportional factor for P control K_{P}, D Proportional factor for control K_{D}) so that the evaluation function is minimized. Thus, the calculated control parameter becomes an appropriate value according to the shape, size and performance of the ship **90.**

The control parameter calculation unit **23** calculates a control parameter (Proportional factor for P control K_{P}, Proportional factor for D control K_{D}) in advance for each ship characteristic parameter (Turning ability index (gain) K*, time constant of steering quality (time constant) T*, and dead time L). Then, the control parameter calculation unit **23** stores each combination in a database.

Upon receiving the ship characteristic parameters (Turning ability index (gain) K*, time constant of steering quality (time constant) T*, and dead time L), the control parameter calculation unit **23** searches the database, reads the control parameters (Proportional factor for P control K_{P}, Proportional factor for D control K_{D}) corresponding to the received ship control parameters from the database, and outputs them.

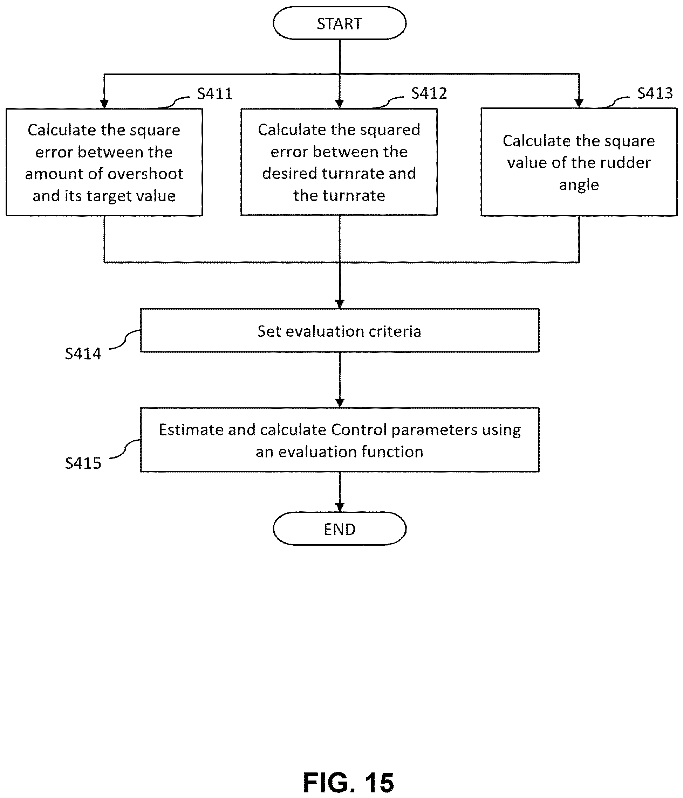

These processes may be realized by prestoring them in a storage unit as a program or the like, and then reading and executing the program by an arithmetic processing device such as a CPU. In this case, the arithmetic processing device may, for example, execute the processing of the flow chart shown in **Fig. 15. Fig. 15** is a flow chart showing the schematic processing of the calculation of control parameters.

The arithmetic processing unit calculates the overshoot amount M of the bow θ_{H} with respect to the target θₛₑₜ, and calculates the squared error between the overshoot amount M and its target value Mₛₑₜ **(S411).** The arithmetic processing unit calculates the squared error between the desired turnrate rₛₑₜ and the turnrate rt **(S412).** The arithmetic processing unit calculates the squared value of the rudder angle ra **(S413).**

The arithmetic processing unit sets an evaluation criterion based on each of the calculated values described above and sets an evaluation function based on the evaluation criterion **(S414).** The arithmetic processing unit estimates and calculates control parameters using the evaluation function **(S415).**

In the above explanation, the mode in which the control parameters and the desired turnrate rₛₑₜ are set from the ship characteristic parameters set by the coupled system of the first order lag and dead time is shown. However, the desired turnrate rₛₑₜ may be a predetermined value.

In the above explanation, three kinds of evaluation criteria for the evaluation function are used. However, the evaluation function may be set using at least one of the three types described above.
10: Ship control device
20: Autopilot processor unit
21, 21 A: Ship characteristic parameter setting unit
22: Desired turnrate calculation unit
23: Control parameter calculation unit
24: Autopilot execution unit
30: Operation unit
31: Ship length input unit
32: Ship breadth input unit
40: Sensor
42: Rudder angle sensor
50: Display unit
60: Thrust control unit
90: Ship
91: Thrust generation unit
92: Rudder
100: Data Communication Network
201: Command rudder angle determination unit
202: Turning angle speed calculation unit
211, 211 A: Steering quality indices calculation unit
212: Rudder rate calculation unit
213: Characteristic parameter estimation unit
231: Simulation input value setting unit
232: Ship model calculation unit
233: Parameter calculation unit
901: bow
902: stern
2111: Turning ability index calculation unit
2112: Non-dimensionalizing unit
2113: Non-dimensionalizing time constant of steering quality calculation unit
2114: Dimensionalizing unit

## Claims

1. A ship control device (10), comprising:
a ship characteristic parameter setting unit (21) configured to set ship characteristic parameters of a combined system of first-order lag and dead time, which integrates a behavior of a rudder (92) and a behavior of a ship (90);
a control parameter calculation unit (23) configured to calculate control parameters for feedback control with respect to a rudder angle of the rudder (92) using the ship characteristic parameters; and
an autopilot execution unit (24) configured to perform the feedback control using the control parameters,
**characterised in that** the ship control device (10) further comprises:
a desired turnrate calculation unit (22) configured to calculate a desired turnrate of a command rudder angle with respect to the rudder angle using the ship characteristic parameters, wherein:
the autopilot execution unit (24) is further configured to perform the feedback control using the desired turnrate.

2. The ship control device (10) as claimed in claim 1, wherein:
the desired turnrate calculation unit (22) is further configured to calculate the desired turnrate using the ship characteristic parameters and a target heading.

3. The ship control device (10) as claimed in claim 1 or 2, wherein:
the control parameter calculation unit (23) is further configured to calculate the control parameters using an evaluation function including the rudder angle, a turnrate, and a heading as evaluation criteria.

4. The ship control device (10) as claimed in claim 3, wherein:
the control parameter calculation unit (23) is further configured to calculate the control parameters by including a squared error between an amount of overshoot of the heading with respect to the target heading and the target heading in the evaluation criteria.

5. The ship control device (10) as claimed in claim 3 or 4, wherein:
the control parameter calculation unit (23) is further configured to calculate the control parameters by including a squared error between the desired turnrate and the turnrate in the evaluation criteria.

6. The ship control device (10) as claimed in any of claims 3 to 5, wherein:
the control parameter calculation unit (23) is further configured to calculate the control parameters by including a squared value of the rudder angle in the evaluation criteria.

7. The ship control device (10) as claimed in any of claims 1 to 6, wherein:
the ship characteristic parameter setting unit (21) comprises:
a steering quality indices calculation unit (211) configured to calculate steering quality indices using a heading, a turnrate and the rudder angle;
a rudder rate calculation unit (212) configured to calculate a rudder rate using the rudder angle; and
a characteristic parameter estimation unit (213) configured to calculate the ship characteristic parameters using the steering quality indices and the rudder rate.

8. The ship control device (10) as claimed in claim 7, wherein:
the characteristic parameter estimation unit (213) is further configured to calculate the ship characteristic parameters using a time-varying characteristic of the turnrate calculated from the rudder rate and the steering quality indices.

9. The ship control device (10) as claimed in claim 8, wherein:
the characteristic parameter estimation unit (213) is further configured to calculate the ship characteristic parameters using two timings having different predetermined values for the turnrate in the time-varying characteristic.

10. The ship control device (10) according to claim 9, wherein:
the characteristic parameter estimation unit (213) is further configured to calculate dead time or a time constant of steering in the ship characteristic parameters using the time-varying characteristic.

11. The ship control device (10) as claimed in any of claims 1 to 6, wherein:
the ship characteristic parameter setting unit (21) comprises:
a steering quality indices calculation unit (211) configured to calculate steering quality indices using a length of ship between perpendiculars relative to the ship (90), a ship breadth of the ship, and a ship speed of the ship (90);
a rudder rate calculation unit (212) configured to calculate a rudder rate using the rudder angle; and
a characteristic parameter estimation unit (213) configured to calculate the ship characteristic parameters using the steering quality indices and the rudder rate.

12. The ship control device (10) as claimed in claim 11, wherein:
the steering quality indices calculation unit (211) comprises:
a turning ability index calculation unit (2111) configured to calculate a turning ability index in the steering quality indices using the length of ship between perpendiculars and the ship breadth, and
a time constant of steering quality calculation unit configured to calculate a time constant of steering quality in the steering quality indices using the turning ability index, the length of ship between perpendiculars, and the ship speed.

13. The ship control device (10) as claimed in claim 12, wherein:
the steering quality indices calculation unit (211) further comprises:
a non-dimensionalizing unit (2112) configured to non-dimensionalize the turning ability index, and wherein:
the time constant of steering quality calculation unit further comprises:
a non-dimensionalizing time constant of steering quality calculation unit (2113) configured to calculate a non-dimensionalizing time constant of steering quality from the non-dimensionalized turning ability index; and
a dimensionalising unit (2114) configured to dimensionalize the non-dimensionalizing time constant of steering quality.

14. A ship control method, comprising:
setting ship characteristic parameters of a combined system of first-order lag and dead time, which integrates a behavior of a rudder (92) and a behavior of a ship (90);
calculating control parameters for feedback control with respect to a rudder angle of the rudder (92) using the ship characteristic parameters; and
performing the feedback control using the control parameters,
the method further comprising:
calculating a desired turnrate of a command rudder angel with respect to the rudder angel, using the ship characteristic parameters; and
performing the feedback control using the desired turnrate.

## Patentansprüche

1. Schiffssteuervorrichtung (10), aufweisend:
eine Schiffscharakteristikparametereinstelleinheit (21), die konfiguriert ist, um Schiffscharakteristikparameter eines kombinierten Systems aus Verzögerung erster Ordnung und Totzeit einzustellen, das ein Verhalten eines Ruders (92) und ein Verhalten eines Schiffs (90) integriert;
eine Steuerparameterberechnungseinheit (23), die konfiguriert ist, um Steuerparameter für eine Rückkopplungssteuerung in Bezug auf einen Ruderwinkel des Ruders (92) unter Verwendung der Schiffscharakteristikparameter zu berechnen; und
eine Autopilotenausführungseinheit (24), die konfiguriert ist, um die Rückkopplungssteuerung unter Verwendung der Steuerparameter durchzuführen,
**dadurch gekennzeichnet, dass** die Schiffssteuervorrichtung (10) ferner aufweist:
eine Solldrehratenberechnungseinheit (22), die konfiguriert ist, um eine Solldrehrate eines Befehlsruderwinkels in Bezug auf den Ruderwinkel unter Verwendung der Schiffscharakteristikparameter zu berechnen, wobei:
die Autopilotenausführungseinheit (24) ferner konfiguriert ist, um die Rückkopplungssteuerung unter Verwendung der Solldrehrate durchzuführen.

2. Schiffssteuervorrichtung (10) nach Anspruch 1, wobei:
die Solldrehratenberechnungseinheit (22) ferner konfiguriert ist, um die Solldrehrate unter Verwendung der Schiffscharakteristikparameter und eines Zielkurses zu berechnen.

3. Schiffssteuervorrichtung (10) nach Anspruch 1 oder 2, wobei:
die Steuerparameterberechnungseinheit (23) ferner konfiguriert ist, um die Steuerparameter unter Verwendung einer Bewertungsfunktion, die den Ruderwinkel, eine Drehrate und einen Kurs umfasst, als Bewertungskriterien zu berechnen.

4. Schiffssteuervorrichtung (10) nach Anspruch 3, wobei:
die Steuerparameterberechnungseinheit (23) ferner konfiguriert ist, um die Steuerparameter zu berechnen, indem sie einen quadrierten Fehler zwischen einem Betrag des Überschwingens des Kurses in Bezug auf den Zielkurs und den Zielkurs in die Bewertungskriterien einbezieht.

5. Schiffssteuervorrichtung (10) nach Anspruch 3 oder 4, wobei:
die Steuerparameterberechnungseinheit (23) ferner konfiguriert ist, um die Steuerparameter zu berechnen, indem sie einen quadrierten Fehler zwischen der Solldrehrate und der Drehrate in die Bewertungskriterien einbezieht.

6. Schiffssteuervorrichtung (10) nach einem der Ansprüche 3 bis 5, wobei:
die Steuerparameterberechnungseinheit (23) ferner konfiguriert ist, um die Steuerparameter zu berechnen, indem sie einen quadrierten Wert des Ruderwinkels in die Bewertungskriterien einbezieht.

7. Schiffssteuervorrichtung (10) nach einem der Ansprüche 1 bis 6, wobei:
die Schiffscharakteristikparametereinstelleinheit (21) aufweist:
eine Lenkqualitätsindexberechnungseinheit (211), die konfiguriert ist, um Lenkqualitätsindexe unter Verwendung eines Kurses, einer Drehrate und des Ruderwinkels zu berechnen;
eine Ruderratenberechnungseinheit (212), die konfiguriert ist, um eine Ruderrate unter Verwendung des Ruderwinkels zu berechnen; und
eine Charakteristikparameterschätzeinheit (213), die konfiguriert ist, um die Schiffscharakteristikparameter unter Verwendung der Lenkqualitätsindexe und der Ruderrate zu berechnen.

8. Schiffssteuervorrichtung (10) nach Anspruch 7, wobei:
die Charakteristikparameterschätzeinheit (213) ferner konfiguriert ist, um die Schiffscharakteristikparameter unter Verwendung einer zeitvariierenden Charakteristik der Drehrate zu berechnen, die aus der Ruderrate und den Lenkqualitätsindexen berechnet wird.

9. Schiffssteuervorrichtung (10) nach Anspruch 8, wobei:
die Charakteristikparameterschätzeinheit (213) ferner konfiguriert ist, um die Schiffscharakteristikparameter unter Verwendung von zwei Zeitpunkten zu berechnen, die unterschiedliche vorbestimmte Werte für die Drehrate in der zeitvariierenden Charakteristik haben.

10. Schiffssteuervorrichtung (10) nach Anspruch 9, wobei:
die Charakteristikparameterschätzeinheit (213) ferner konfiguriert ist, um eine Totzeit oder eine Zeitkonstante des Lenkens in den Schiffscharakteristikparametern unter Verwendung der zeitvariierenden Charakteristik zu berechnen.

11. Schiffssteuervorrichtung (10) nach einem der Ansprüche 1 bis 6, wobei:
die Schiffscharakteristikparametereinstelleinheit (21) aufweist:
eine Lenkqualitätsindexberechnungseinheit (211), die konfiguriert ist, um Lenkqualitätsindexe unter Verwendung einer Schiffslänge zwischen Senkrechten relativ zu dem Schiff (90), einer Schiffsbreite des Schiffs und einer Schiffsgeschwindigkeit des Schiffs (90) zu berechnen;
eine Ruderratenberechnungseinheit (212), die konfiguriert ist, um eine Ruderrate unter Verwendung des Ruderwinkels zu berechnen; und
eine Charakteristikparameterschätzeinheit (213), die konfiguriert ist, um die Schiffscharakteristikparameter unter Verwendung der Lenkqualitätsindexe und der Ruderrate zu berechnen.

12. Schiffssteuervorrichtung (10) nach Anspruch 11, wobei:
die Lenkqualitätsindexberechnungseinheit (211) aufweist:
eine Drehfähigkeitsindexberechnungseinheit (2111), die konfiguriert ist, um einen Drehfähigkeitsindex in den Lenkqualitätsindexen unter Verwendung der Schiffslänge zwischen Senkrechten und der Schiffsbreite zu berechnen, und
eine Zeitkonstante der Lenkqualitätsberechnungseinheit, die konfiguriert ist, um eine Zeitkonstante der Lenkqualität in den Lenkqualitätsindexen unter Verwendung des Drehfähigkeitsindex, der Schiffslänge zwischen Senkrechten und der Schiffsgeschwindigkeit zu berechnen.

13. Schiffssteuervorrichtung (10) nach Anspruch 12, wobei:
die Lenkqualitätsindexberechnungseinheit (211) ferner aufweist:
eine Nichtdimensionalisierungseinheit (2112), die konfiguriert ist, um den Drehfähigkeitsindex nicht zu dimensionalisieren, und wobei:
die Zeitkonstante der Lenkqualitätsberechnungseinheit ferner aufweist:
eine nichtdimensionalisierende Zeitkonstante der Lenkqualitätsberechnungseinheit (2113), die konfiguriert ist, um eine nichtdimensionalisierende Zeitkonstante der Lenkqualität aus dem nicht dimensionalisierten Drehfähigkeitsindex zu berechnen; und
eine Dimensionalisierungseinheit (2114), die konfiguriert ist, um die nichtdimensionalisierende Zeitkonstante der Lenkqualität zu dimensionalisieren.

14. Schiffssteuerverfahren, aufweisend:
Einstellen von Schiffscharakteristikparametern eines kombinierten Systems aus Verzögerung erster Ordnung und Totzeit, das ein Verhalten eines Ruders (92) und ein Verhalten eines Schiffs (90) integriert;
Berechnen von Steuerparametern für eine Rückkopplungssteuerung in Bezug auf einen Ruderwinkel des Ruders (92) unter Verwendung der Schiffscharakteristikparameter; und
Durchführen der Rückkopplungssteuerung unter Verwendung der Steuerparameter,
wobei das Verfahren ferner aufweist:
Berechnen einer Solldrehrate eines Befehlsruderwinkels in Bezug auf den Ruderwinkel unter Verwendung der Schiffscharakteristikparameter; und
Durchführen der Rückkopplungssteuerung unter Verwendung der Solldrehrate.

## Revendications

1. Dispositif de commande de navire (10), comprenant :
une unité de réglage des paramètres caractéristiques du navire (21) configurée pour définir les paramètres caractéristiques de navire d'un système combiné de retard d'ordre un et de temps mort, intégrant un comportement d'un gouvernail (92) et un comportement d'un navire (90) ;
une unité de calcul des paramètres de commande (23) configurée pour calculer les paramètres de commande pour la commande à asservissement concernant un angle de gouvernail du gouvernail (92) à l'aide des paramètres caractéristiques du navire ; et
une unité d'exécution du pilote automatique (24) configurée pour effectuer la commande à asservissement à l'aide des paramètres de commande,
**caractérisé en ce que** le dispositif de commande de navire (10) comprend en outre :
une unité de calcul du taux de virage souhaité (22) configurée pour calculer un taux de virage souhaité d'un angle de gouvernail de commande par rapport à l'angle de gouvernail à l'aide des paramètres caractéristiques du navire, dans lequel :
l'unité d'exécution du pilote automatique (24) est en outre configurée pour effectuer la commande à asservissement à l'aide du taux de virage souhaité.

2. Dispositif de commande de navire (10) selon la revendication 1, dans lequel :
l'unité de calcul du taux de virage souhaité (22) est en outre configurée pour calculer le taux de virage souhaité à l'aide des paramètres caractéristiques du navire et un cap cible.

3. Dispositif de commande de navire (10) selon la revendication 1 ou 2, dans lequel :
l'unité de calcul des paramètres de commande (23) est en outre configurée pour calculer les paramètres de commande à l'aide d'une fonction d'évaluation incluant l'angle de gouvernail, un taux de virage et un cap comme critères d'évaluation.

4. Dispositif de commande de navire (10) selon la revendication 3, dans lequel :
l'unité de calcul des paramètres de commande (23) est en outre configurée pour calculer les paramètres de commande en incluant dans les critères d'évaluation une erreur quadratique entre une quantité de dépassement du cap par rapport au cap cible et le cap cible.

5. Dispositif de commande de navire (10) selon la revendication 3 ou 4, dans lequel :
l'unité de calcul des paramètres de commande (23) est en outre configurée pour calculer les paramètres de commande en incluant dans les critères d'évaluation une erreur quadratique entre la vitesse de virage souhaitée et la vitesse de virage .

6. Dispositif de commande de navire (10) selon l'une quelconque des revendications 3 à 5, dans lequel :
l'unité de calcul des paramètres de commande (23) est en outre configurée pour calculer les paramètres de commande en incluant une valeur au carré de l'angle de gouvernail dans les critères d'évaluation.

7. Dispositif de commande de navire (10) selon l'une quelconque des revendications 1 à 6, dans lequel :
l'unité de réglage des paramètres caractéristiques du navire (21) comprend :
une unité de calcul des indices de qualité de direction (211) configurée pour calculer les indices de qualité de direction à l'aide d'un cap, d'une vitesse de virage et de l'angle de gouvernail ;
une unité de calcul du taux de gouvernail (212) configurée pour calculer un taux de gouvernail à l'aide de l'angle de gouvernail ; et
une unité d'estimation des paramètres caractéristiques (213) configurée pour calculer les paramètres caractéristiques du navire à l'aide des indices de qualité de direction et du taux de gouvernail.

8. Dispositif de commande de navire (10) selon la revendication 7, dans lequel :
l'unité d'estimation des paramètres caractéristiques (213) est en outre configurée pour calculer les paramètres caractéristiques du navire à l'aide d'une caractéristique temporellement variable du taux de virage calculée à partir du taux de gouvernail et des indices de qualité de la direction.

9. Dispositif de commande de navire (10) selon la revendication 8, dans lequel :
l'unité d'estimation des paramètres caractéristiques (213) est en outre configurée pour calculer les paramètres caractéristiques du navire à l'aide de deux instants ayant des valeurs prédéterminées différentes pour le taux de virage dans la caractéristique variant dans le temps.

10. Dispositif de commande de vitesse de navire (10) selon la revendication 9, dans lequel :
l'unité d'estimation des paramètres caractéristiques (213) est en outre configurée pour calculer le temps mort ou une constante de temps de la direction dans les paramètres caractéristiques du navire à l'aide de la caractéristique variable dans le temps.

11. Dispositif de commande de navire (10) selon l'une quelconque des revendications 1 à 6, dans lequel :
l'unité de réglage des paramètres caractéristiques du navire (21) comprend :
une unité de calcul des indices de qualité de direction (211) configurée pour calculer les indices de qualité de direction à l'aide d'une longueur entre perpendiculaires du navire (90), une largeur du navire, et une vitesse du navire (90) ;
une unité de calcul du taux de gouvernail (212) configurée pour calculer un taux de gouvernail à l'aide de l'angle de gouvernail ; et
une unité d'estimation des paramètres caractéristiques (213) configurée pour calculer les paramètres caractéristiques du navire à l'aide des indices de qualité de direction et du taux de gouvernail.

12. Dispositif de commande de navire (10) selon la revendication 11, dans lequel :
l'unité de calcul des indices de qualité de direction (211) comprend :
une unité de calcul de l'indice de capacité de virage (2111) configurée pour calculer un indice de capacité de virage dans les indices de qualité de direction à l'aide de la longueur de navire entre perpendiculaires et la largeur du navire, et
une constante de temps de l'unité de calcul de la qualité de la direction configurée pour calculer une constante de temps de la qualité de la direction dans les indices de qualité de la direction à l'aide de l'indice de capacité de virage, la longueur de navire entre perpendiculaires et la vitesse du navire.

13. Dispositif de commande de navire (10) selon la revendication 12, dans lequel :
l'unité de calcul des indices de qualité de direction (211) comprend en outre :
une unité de non-dimensionnalisation (2112) configurée pour non-dimensionnaliser l'indice de capacité de virage, et dans laquelle :
la constante de temps de l'unité de calcul de la qualité de la direction comprend en outre :
une constante de temps de non-dimensionnalisation de l'unité de calcul de la qualité de la direction (2113) configurée pour calculer une constante de temps de non-dimensionnalisation de la qualité de la direction à partir de l'indice de capacité de virage non-dimensionnalisé ; et
une unité de dimensionnalisation (2114) configurée pour dimensionnaliser la constante de temps de non-dimensionnalisation de la qualité de la direction.

14. Procédé de commande de navire, comprenant :
le réglage des paramètres caractéristiques du navire d'un système combiné de retard d'ordre un et de temps mort, intégrant un comportement d'un gouvernail (92) et un comportement d'un navire (90) ;
le calcul des paramètres de commande pour la commande à asservissement par rapport à un angle de gouvernail du gouvernail (92) à l'aide des paramètres caractéristiques du navire ; et
la réalisation de la commande à asservissement à l'aide des paramètres de commande,
le procédé comprenant en outre :
le calcul d'un taux de virage souhaité d'un angle de gouvernail de commande par rapport à l'angle de gouvernail, à l'aide des paramètres caractéristiques du navire ; et
la réalisation de la commande à asservissement à l'aide du taux de virage souhaité.
